# EUROPEAN PATENT APPLICATION

(11) **EP 3 825 353 A1**
(43) Date of publication of application: **26.05.2021**
(21) Application number: 19210451.1
(22) Date of filing: 20.11.2019
(51) Int. Cl.: C08J 9/00, C08J 9/14, C08J 9/16, B29C 48/00, B29C 44/34, B29C 44/44

(54) **A PRODUCT MADE OF AN EXPANDED PLASTIC MATERIAL, EXTRUDED EXPANDABLE PLASTIC PARTICLES, AND METHOD FOR PRODUCING A PLURALITY OF EXPANDABLE PLASTIC PARTICLES**

(71) Applicant: Storopack Hans Reichenecker GmbH, 72555 Metzingen (DE)
(72) Inventor: MAHÉ, Anthony, 44860 PONT SAINT MARTIN (FR); BÉRRARD, Jérôme, 10200 THIL (FR); POISSON, Charles, 49300 CHOLET (FR)
(74) Representative: DREISS Patentanwälte PartG mbB

(57) **Abstract**

Extruded expandable plastic particles (64) for producing a product made of an expanded plastic material, wherein the extruded expandable plastic particles (64) are manufactured by introducing a powder type plastic material (14) into an extrusion device (20), supplying temperature, pressure and an expansion agent, and extruding the mixture of plastic material and expansion agent into a string type intermediate product (52). The invention proposes that the plastic particles (64) are manufactured by additionally stretching the string type intermediate product (52) in its lengthwise direction (66) prior to and/or during cooling it down, and cutting the stretched and cooled string type intermediate product (52) into string portions forming the expandable plastic particles (64).

## Description

The present invention relates to a product made of an expanded plastic material, to extruded expandable plastic particles, and to a method for producing a plurality of expandable plastic particles, according to the preambles of the independent claims.

It is known to produce a product made of an expanded plastic material in a form mold. For this, expandable plastic particles, for example made of polystyrene and including an expanding or foaming agent like pentane, are filled in a mold cavity, and thereafter the mold cavity is filled with hot steam. This causes the plastic particles to expand and to adhere to each other, thereby resulting in a unitary solid foam product. Such foam products are used for example as cushioning elements for shipping an item in a container, or for example in the automotive industry as part of shock absorbers.

The expandable plastic particles are manufactured by introducing a powder type plastic material into an extrusion device, supplying temperature, pressure and the expansion agent, extruding the mixture of plastic material and expansion agent into a string type intermediate product, and cooling and cutting the string type intermediate product into said expandable particles. Related art is for example EP 2 241 590 B1.

It is be desirable to provide an improved product made of expanded plastic material, improved extruded expandable plastic particles for producing such a product, and an improved method for producing the expandable plastic particles.

This object is achieved by a product made of expanded plastic material, extruded expandable plastic particles, and a method for producing such expandable plastic particles with the features of the independent claims. Further embodiments are described in the subclaims.

In one aspect, a product is provided made of an expanded plastic material. By consequence, the product has a consistence of a solidified foam. The expanded plastic material comprises expanded plastic particles adhering to one another, as it is known, by way of example, from typical polystyrene foam products known under the tradename Styropor®.

The expanded plastic particles according to the invention have at least two groups of micro-cavities, the first group of micro-cavities having a first diameter within a first diameter range, and the second group of micro-cavities having a second diameter within a second diameter range. These micro-cavities provide for the foam type consistence of the product. The first diameter range and the second diameter range do not overlap.

This is an indication that there are at least two different sources or causes for the occurrence of the micro-cavities during the expansion or foaming process, as it is the case when the expandable plastic particles used for the production of the foam product have been produced on the basis of recycled plastic material comprising impurities. While the smaller micro-cavities are solely caused by the expansion agent, the larger micro-cavities develop at the locations of the above mentioned impurities. According to the invention, the average molecular weight or mass of the expanded plastic material ranges approximately from 130000-190000g/mol.

The product according to the invention has advantages over classic foam plastic material since it is made of recycled plastic material and therefore has a considerably improved ecological footprint.

In a further embodiment, the first diameter range ranges approx. from 50 to 100 µm and the second diameter range ranges approx. from 100 to 1000 µm. These values have been proven to provide excellent cushioning and shock absorbing characteristics and a low density of the material and, by consequence, a relatively low weight of the finished product. The mentioned values can easily be achieved by using recycled plastic material without the need to invest a large effort in removing impurities normally present in such recycled plastic material. By consequence, in the extrusion process, a filter having relatively large holes can be used which facilitates the movement of the plastic melt through the filter.

With respect to the term "diameter" it is to be mentioned that the micro-cavities, of course, are not necessarily exactly spherical, but rather may have an irregular shape. The term "diameter" therefore is to be understood either as a kind of mean value of the interior width of a micro-cavity or as the largest dimension of the interior width of a micro-cavity.

In a further embodiment, the plastic comprises polystyrene and/or polyolefin and/or polylactide and/or polyamide and/or polycarbonate and/or polyester. These plastic materials can be recycled easily and are very suitable for manufacturing a foamed product on the basis of such recycled materials.

In another aspect, extruded expandable plastic particles for producing a product made of an expanded plastic material are provided. It is to be understood that the term "expandable" means that the volume of the plastic particles increases under specific conditions by developing micro-cavities. Or, in other words: the rather solid expandable plastic particles transform into a foam type plastic material.

The plastic particles are manufactured by introducing a powder type plastic material into an extrusion device. The term "powder" in the present context is to be understood in a broad sense incorporating also for example pellets and granulate and the like. Manufacturing the expandable plastic particles includes supplying temperature and pressure such that a melt is formed, and an expansion or "foaming" agent, and extruding the melted mixture of plastic material and expansion agent into an endless string or "spaghetti" type intermediate product.

According to the invention, the string type intermediate product is stretched in its lengthwise direction prior to and/or during cooling it down. By doing so, the polymer strings are stretched which gives them an essentially parallel orientation in lengthwise direction of the string type intermediate product. Cooling during and/or after stretching fixes the polymer strings in their essentially parallel state. Thereafter, the stretched and cooled string type intermediate product is cut into string portions forming the expandable plastic particles.

The extruded expandable plastic particles according to the present invention have specific material properties during expansion, that is an asymmetrical expansion characteristic. This allows to use the plastic particles according to the invention for applications and for manufacturing foam products different than the prior art. Furthermore, the specific orientation of the polymer strings provides excellent expansion and material characteristics even when recycled powder type plastic material is used as the basic material for the production of the extruded expandable plastic particles.

In a further embodiment, the expandable plastic particles have a shape with a longitudinal axis, and an expansion characteristic of the plastic particles is such that during expansion a dimension of the particles transverse to the longitudinal axis increases at least five times more than a dimension of the particles parallel to the longitudinal axis. The plastic particles therefore have very distinct asymmetrical expansion properties, which allows for new material characteristics and visual effects at the finished molded and foamed product.

In a further embodiment, an orientation degree is less than approximately 10%, more preferably less than approximately 5%. The orientation degree is well known material property which can be measured using x-ray diffraction. A method for measuring the orientation degree is given for example in European patent EP 1 416 031 B1. An orientation degree of less than approximately 10% is equivalent to an intensity distribution variation less than 10% obtained by fixing a peak scattering angle and by varying the azimuth angle from 0 to 360°. The required orientation degree defines the required stretching rate of the string type intermediate product during or after extrusion, respectively. An extruded material with an orientation degree of 10% or less shows distinct asymmetrical expansion properties, which is even more apparent if the orientation degree as 5% or less.

In a further embodiment, in the non-expanded state, the expandable plastic particles have a ratio of the dimension parallel to the longitudinal axis to the dimension transverse to the longitudinal axis of approx. 1 to approx. 10. If the ratio is approximately 1, the particles are rather bead type, if the ratio is approximately 10, the particles are rather elongated, if not to say cylindrical. The indicated range of ratios provides, together with the asymmetrical expansion properties, for unique and new material properties of the finished molded foam product.

In a further embodiment, in the non-expanded state, the expandable plastic particles have a dimension parallel to the longitudinal axis in the range of approx. 1-8 mm and/or a dimension transverse to the longitudinal axis in the range of approx. 0,5-1,5 mm. These dimensions have been proven to allow for an easy and reliable extrusion.

In another aspect, a method for producing a plurality of expandable plastic particles for producing a product made of an expanded plastic material is provided, the method comprising the following steps: a. providing a powder-type plastic material to an inlet of an extrusion device; b. moving the powder-type plastic material in an extrusion direction; c. heating the powder-type plastic material while moving it in the extrusion direction such that it forms a plastic melt; d. introducing an expansion agent into the plastic melt while moving it in the extrusion direction; e. extruding the mixture of plastic melt and expansion agent through an extrusion die having at least one opening such that a string type intermediate product is obtained; f. stretching the string type intermediate product in its lengthwise direction; g. during and/or after stretching: cooling the string type intermediate product; h. cutting the cooled string type intermediate product into string portions forming the expandable plastic particles. With this method, expandable plastic particles may be produced even on the basis of recycled powder-type plastic material having good and asymmetrical expansion characteristics allowing the production of specific and new molded foam products.

In a further embodiment, a transverse dimension of the string type intermediate product is in the range of approx. 0,5-1,5 mm. As already mentioned above, the indicated values allow for an easy and reliable extrusion.

In a further embodiment, during the stretching step a transverse dimension of the of string type intermediate product decreases by approx. 50%. Such a degree of stretching provides for a sufficiently low degree of orientation of the polymer strings such that the above mentioned distinct asymmetrical expansion properties can be achieved.

In a further embodiment, during moving the plastic melt in the extrusion direction, a nucleating agent, preferably talcum, is added. This helps to provide a specific and required porosity of the plastic particles after expansion.

In a further embodiment, the at least one opening in the extrusion die has a circular shape, an S-shape, a star shape, an L-shape, or an I-shape. Together with the asymmetrical expansion properties, new shapes of the expanded plastic particles can be achieved, and therefore new material properties and new visual appearances of the finished molded foam product may be obtained.

In a further embodiment, the powder-type plastic material is formed from recycled polystyrene and/or from recycled polypropylene. Polystyrene as well as polypropylene can be recycled easily for example by grinding or milling in order to obtain a powder-type plastic material, which, as has been mentioned already further above, comprises also pellets and granulate and the like.

In a further embodiment, a mixture of powder-type plastic materials of different origins is used. This provides for uniform material properties in different manufacturing batches, since a variety of different molecules is used.

Other aspects and advantages of the invention will become apparent from the following description, taken in conjunction with the accompanying drawings, illustrating by way of example the principles of the invention. In the drawing is shown in
- Figure 1: a schematic representation of an extrusion device for producing a plurality of expandable plastic particles;
- Figure 2: a side view of a plastic particle produced by the extrusion device of figure 1 before and after expansion;
- Figure 3: a front view of the plastic particle of figure 2 before and after expansion;
- Figure 4: an enlarged section of the plastic particle of figures 2 and 3 after expansion; and
- Figure 5: a flowchart of a method for producing a plurality of the expandable plastic particles of figures to 2-4.

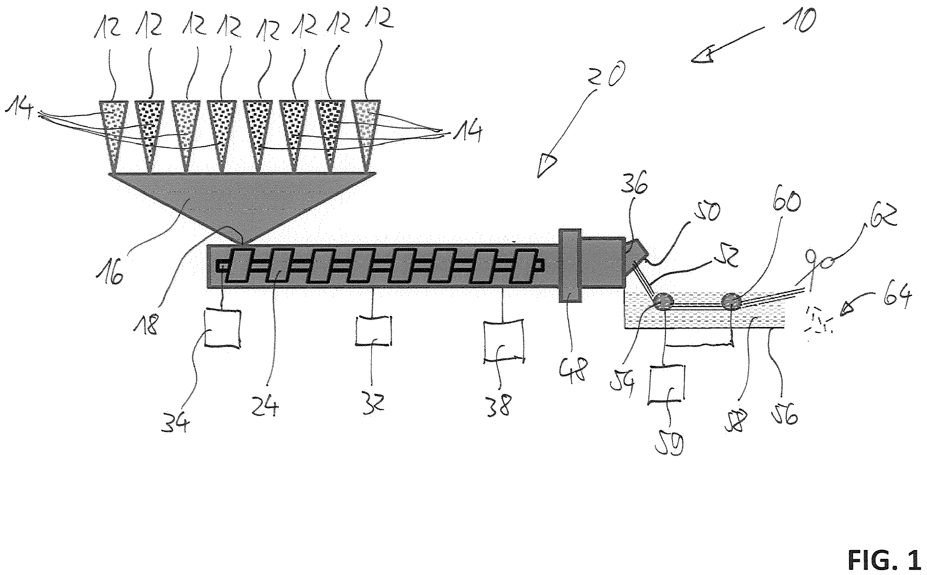

A production device for producing extruded expandable plastic particles in figure 1 is generally designated with reference numeral 10. It comprises a plurality of hoppers 12 being filled with different powder-type plastic materials 14, that is each hopper 12 is filled with one specific powder-type plastic material 14. "Different" in the present context means that the powder-type plastic materials 14 have different origins, for example, from different plants and/or are provided using different methods. The powder-type plastic materials 14, for example, may all be provided by recycling products made of plastic, such as molded foam parts used as cushioning or shock-absorbing means. However, it is also possible that only some of the powder-type plastic materials 14 are provided by recycling, and some are provided as new and non-recycled material.

Recycling molded foam parts may include compressing the foam parts and, thereafter, grinding or milling the compressed foam parts in order to obtain the powder-type plastic material 14. The recycling method may also include a cleaning step which removes at least larger impurities. It is also to be understood that the powder-type plastic material 14 may comprise very small powder particles, but also may comprise additionally or solely pellet-type or granulate-type particles or the like.

The powder-type plastic material 14 may comprise polystyrene and/or polyolefin and/or polylactide and/or polyamide and/or polycarbonate. However, polystyrene is preferred.

In the presently shown exemplary embodiment, eight different hoppers 12 with eight different powder-type plastic materials 14 are provided. The individual hoppers 12 supply the powder-type plastic materials to a common hopper 16, in which the different powder-type plastic materials 14 are pre-mixed. The common hopper 16 supplies the pre-mixed powder-type plastic materials 14 to an inlet 18 of an extrusion device 20.

By way of example, the extrusion device 20 is a device having an extrusion screw 24. However, it is to be understood that also a multiple-stage extrusion device may be used.

The extrusion device 20 comprises heating means 32 and drive means 34. The drive means 34 actuate the extrusion screw 24 in order to rotate and to move the powder-type plastic material 14 from the inlet 18 to an outlet 36. The heating means 32 raises the temperature of the powder-type plastic material 14 during its movement through the extrusion device 20 such that on its way the powder-type plastic material 14 is transformed into a plastic melt in the form of a rather compact paste. The temperature may reach up to 200°C.

Prior to the outlet 36, the extrusion device 20 comprises expansion agent injection means 38, which inject an expansion agent, which may also be called "foaming agent", into the plastic melt. The expansion agent may be pentane, and the ratio by mass of pentane to plastic melt after injection may be about 5%.

At the outlet 36 the temperature may be in the range of approximately 110°C. During movement through the extrusion device 20 close to the outlet 36 the pressure increases, since the density of the plastic melt increases and its viscosity decreases.

Immediately before the outlet 36, a filter means 48 is arranged in order to remove impurities from the plastic melt. The filter means 48 may be a metal disk having a multitude of small holes. It is to be understood that the filter means 48 is not intended to remove any impurity, but rather may allow a certain quantity of smaller impurities to remain in the plastic melt. It is even possible that, when the plastic melt is moved to the outlet 36, a nucleating agent, preferably talcum, is added. In a non-shown embodiment there might be more than two filters. However, even if there are multiple filters, a certain quantity of smaller impurities will remain in the plastic melt.

At the outlet 36 of the extrusion device 20, an extrusion die 50 is provided having a plurality of openings (not shown) such that a plurality of endless string or spaghetti type intermediate products 52 is obtained. The openings in the extrusion die 50 may have a circular shape, and S-shape, a star shape, and L-shape, and/or an I-shape. Accordingly, the string type intermediate products 52 may have a circular shape, an S-shape, a star shape, an L-shape, and/or an I-shape cross section. It is possible that all openings of the extrusion die 50 are identical, but also different types of openings and also different sizes of openings may be provided. Preferably, a transverse dimension of the string type intermediate product 52 is in the range of approximately 0,5 to 1,5 mm.

After the string type intermediate products 52 have left the extrusion die 50, they slightly cool down by the environmental air, and they are received by a first driven roller 54 which is, by way of example, in the embodiment shown in figure 1 submerged in a tank 56 filled with a cooling liquid, such as water 58. A drive of the first driven roller 54 is indicated by reference numeral 59. The string type intermediate products 52 are fed from the first driven roller 54 to a second driven roller 62 which is similarily submerged in the tank 56 and which is also driven by drive 59. From the second driven roller 62 and the tank 56 the string type intermediate products 52 are fed to a cutting assembly 62 which cuts the string type intermediate products 52 into string portions 64 forming the expandable plastic particles. Cutting may occur, as shown in figure 1, after the string type intermediate products 52 have left the water 58 in the tank 56. However, it is also possible in a non-shown embodiment that cutting takes place within the water tank, that is at the string type intermediate products being submerged in the water.

The rotational speeds of the first driven roller 54 and the second driven roller 62 are equal to each other but slightly higher than the exit speed of the string type intermediate products 52 when they exit the extrusion die 50. By consequence, the string type intermediate products 52 are stretched between the extrusion die 50 and the first driven roller 54 in their lengthwise direction. During this stretching step, a transverse dimension of the string type intermediate products 52 decreases preferably by approximately 50%.

With the production device 10 shown in figure 1, extruded expandable plastic particles 64 are manufactured which can be used for producing a foam product made of an expanded plastic material. Such a product is typically produced by filling a mold cavity with the extruded expandable plastic particles 64 and introducing hot steam into the mold cavity. The hot steam makes the pentane included in the extruded expandable plastic particles 64 to expand, such that the extruded expandable plastic particles 64 migrate into a foamed condition and such that the extruded expanded plastic particles can adhere to each other during molding.

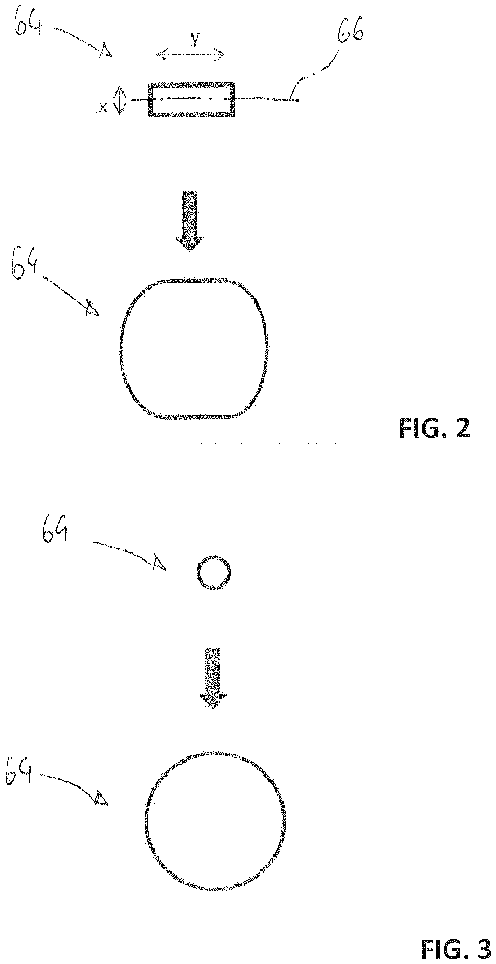

As can be seen from figures 2 and 3, the extruded expandable plastic particles 64 have asymmetrical expansion properties. In figures 2 and 3, by way of example, the extruded expandable plastic particle 64 has a cylindrical shape with a longitudinal axis 66. The expansion characteristic of the extruded expandable plastic particle 64 is such that during expansion the dimension of the particle 64 transverse to the longitudinal axis 66 increases at least five times more than the dimension of the extruded expandable plastic particles 64 parallel to the longitudinal axis 66. This is provided by the above mentioned stretching step between the extrusion die 50 and the first driven roller 54, which leads to an orientation degree of 10% or less, preferably of 5% or less. Or, in other words: A majority of the polymer strings of the extruded expandable plastic particles 64 is arranged more or less parallel to the longitudinal axis 66.

The orientation degree is well known material property which can be measured using x-ray diffraction. A method for measuring the orientation degree is given for example in European patent EP 1 416 031 B1. An orientation degree of less than approximately 10% is equivalent to an intensity distribution variation less than 10% obtained by fixing a peak scattering angle and by varying the azimuth angle from 0 to 360°.

As can be seen from figure 2, the extruded expandable plastic particle 64, in the non-expanded state, has a ratio of the dimension y parallel to the longitudinal axis 66 to the dimension x transverse to the longitudinal axis 66 of approximately 2.5, which is well within the preferred range of 1-10. Furthermore, in the non-expanded state in the upper part of figures 2 and 3, the extruded expandable plastic particles 64 may have a dimension y parallel to the longitudinal axis 66 in the range of approx. 1-8 mm and/or a dimension x transverse to the longitudinal axis 66 in the range of approx. 0,5-1,5 mm.

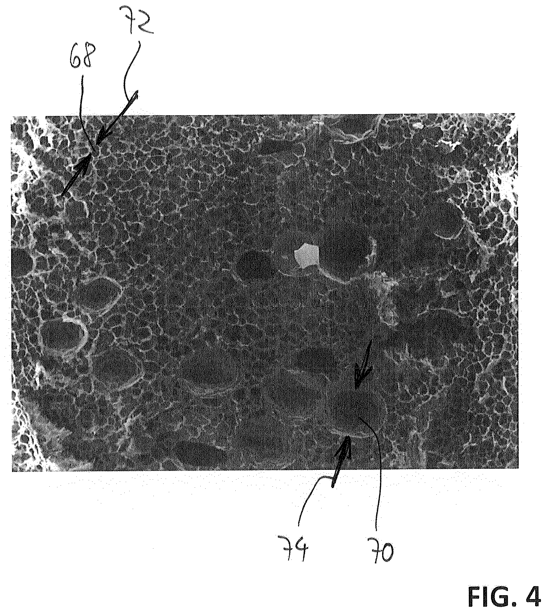

Figure 4 is an enlarged sectional view of an extruded expanded plastic particle 64, that is after expansion, as it is seen through a microscope. The expanded plastic particle 64 has two groups of micro-cavities 68 and 70, the first group of micro-cavities 68 having a first relatively small diameter 72 within a first diameter range, and the second group of micro-cavities 70 having a second relatively large diameter 74 within a second diameter range. The first diameter range and the second diameter range do not overlap. The average molecular weight of the extruded expanded plastic particle 64 ranges approximately from 130,000 to 190,000 g/mol.

By way of example, in the present embodiment as shown in figure 4, the first diameter 72 is approximately 75pm and the second diameter 74 is approximately 400pm. Both values are well within the preferred ranges, the first preferred diameter range ranging approximately from 50 to 100µm and the second preferred diameter range ranging approximately from 100 to 1000µm.

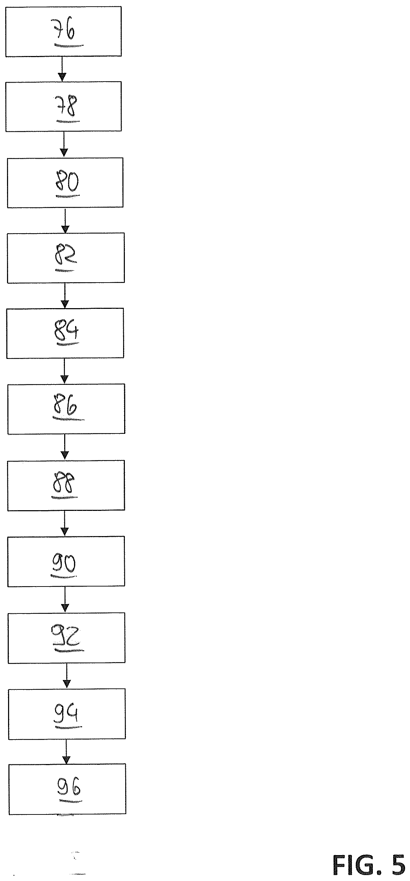

A method for producing the plurality of expandable plastic particles 64 is now explained referring to figure 5. The method starts in block 76. In block 78, the powder-type plastic material 14 is provided to the inlet 18 of the extrusion device 20. In block 80, the powder-type plastic material 14 is moved in an extrusion direction, which is defined by the longitudinal axis of the extrusion screw 24.

In block 82, the powder-type plastic material 14 is heated by heating means 32 while moving it in the extrusion direction such that it forms a plastic melt. In block 84, during moving the plastic melt in the extrusion direction, a nucleating agent, such as talcum, is added. In block 86, an expansion agent, such as pentane, is introduced by means of the expansion agent injection means 38 into the plastic melt while moving it in the extrusion direction.

In block 88, the mixture of plastic melt and expansion agent is extruded through the extrusion die 50 having a plurality of openings, such that the string type intermediate products 52 are obtained. In block 90, the string type intermediate products 52 are stretched in their lengthwise direction, as was explained above with reference to first driven roller 54. In block 92, the stretched string type intermediate products 52 are cooled. This cooling may occur during stretching and/or after stretching. Finally, in block 94, the cooled string type intermediate products 52 are cut by means of the cutting assembly 62 into the above mentioned string portions 64 forming the extruded expandable plastic particles. The method ends in block 96.

## Claims

1. A **product made of an expanded plastic material,** the expanded plastic material comprising expanded plastic particles (64) adhering to one another, the expanded plastic particles (64) having at least two groups of micro-cavities (68, 70), the first group of micro-cavities (68) having a first diameter (72) within a first diameter range, and the second group of micro-cavities (70) having a second diameter (74) within a second diameter range, wherein the first diameter range and the second diameter range do not overlap, **characterized in that** the average molecular weight of the expanded plastic particles (64) ranges approximately from 130000-190000g/mol.

2. The product according to claim 1, wherein the first diameter range ranges approx. from 50 to 100 µm and the second diameter range ranges approx. from 100 to 1000 µm.

3. The product according to at least one of the preceding claims, wherein the plastic comprises polystyrene and/or polyolefin and/or polylactide and/or polyamide and/or polycarbonate and/or polyester.

4. **Extruded expandable plastic particles (64) for producing a product made of an expanded plastic material,** wherein the extruded expandable plastic particles (64) are manufactured by introducing a powder type plastic material (14) into an extrusion device (20), supplying temperature, pressure and an expansion agent, extruding the mixture of plastic material and expansion agent into a string type intermediate product (52), **characterized in that** the plastic particles (64) are manufactured by additionally stretching the string type intermediate product (52) in its lengthwise direction (66) prior to and/or during cooling it down, and cutting the stretched and cooled string type intermediate product (52) into string portions forming the expandable plastic particles (64).

5. The extruded expandable plastic particles (64) according to at least one of the preceding claims, wherein the extruded expandable plastic particles (64) have a shape with a longitudinal axis (66), and wherein an expansion characteristic of the extruded expandable plastic particles (64) is such that during expansion a dimension of the extruded expandable plastic particles (64) transverse to the longitudinal axis (66) increases at least five times more than a dimension of the extruded expandable plastic particles (64) parallel to the longitudinal axis (66).

6. The extruded expandable plastic particles (64) according to at least one of the preceding claims, wherein an orientation degree is approximately 10% or less, more preferably approximately 5% or less.

7. The extruded expandable plastic particles (64) according to at least one of the preceding claims, wherein, in the non-expanded state, they have a ratio of the dimension parallel to the longitudinal axis (66) to the dimension transverse to the longitudinal axis (66) of approx. 1 to approx. 10.

8. The extruded expandable plastic particles (64) according to at least one of the preceding claims, wherein, in the non-expanded state, they have a dimension parallel to the longitudinal axis (66) in the range of approx. 1-8 mm and/or a dimension transverse to the longitudinal axis (66) in the range of approx. 0,5-1,5 mm.

9. **A method for producing a plurality of expandable plastic particles (64) for producing a product made of an expanded plastic material,** the method comprising the following steps:
a. providing a powder-type plastic material (14) to an inlet of an extrusion device (20);
b. moving the powder-type plastic material (14) in an extrusion direction;
c. heating the powder-type plastic material (14) while moving it in the extrusion direction such that it forms a plastic melt;
d. introducing an expansion agent into the plastic melt while moving it in the extrusion direction;
e. extruding the mixture of plastic melt and expansion agent through an extrusion die (50) having at least one opening such that a string type intermediate product (52) is obtained;
**characterized in that** the method comprises the following additional steps:
f. stretching the string type intermediate product (52) in its lengthwise direction (66);
g. during and/or after stretching: cooling the string type intermediate product (52);
h. cutting the cooled string type intermediate product (52) into string portions forming the expandable plastic particles (64).

10. The method according to at least one of the preceding claims, wherein a transverse dimension of the string type intermediate product (52) is in the range of approx. 0.5-1.5mm.

11. The method according to at least one of the preceding claims, wherein during the stretching step a transverse dimension of the of string type intermediate product (52) decreases by approx. 50%.

12. The method according to at least one of the preceding claims, wherein during moving the plastic melt in the extrusion direction, a nucleating agent, preferably talcum, is added.

13. The method according to at least one of the preceding claims, wherein the at least one opening in the extrusion die (50) has a circular shape, an S-shape, a star shape, an L-shape, or an I-shape.

14. The method according to at least one of the preceding claims, wherein the powder-type plastic material (14) is formed from recycled polystyrene and/or from recycled polypropylene

15. The method of claim 14, wherein a mixture of powder-type plastic materials (14) of different origins is used.
